# EUROPEAN PATENT APPLICATION

(11) **EP 2 662 013 A1**
(43) Date of publication of application: **13.11.2013**
(21) Application number: 12166929.5
(22) Date of filing: 07.05.2012
(51) Int. Cl.: A47L 15/42, A47L 15/48, A47L 15/00

(54) **A dishwashing machine with a heat-pump drying device and associated method**

(71) Applicant: ELECTROLUX PROFESSIONAL S.p.A., 33170 Pordenone (IT)
(72) Inventor: Tassan-Mangina, Franco, 33170 Pordenone (IT); Salton, Fabrizio, 33170 Pordenone (IT); Fadelli, Marino, 33170 Pordenone (IT)
(74) Representative: Markovina, Paolo

(57) **Abstract**

Dishwashing machine (1) comprising a tub (3) for housing dishware to be cleaned, first (8) and second revolving arms (10) arranged inside the tub (3) and configured to sprinkle dishware with water during a washing phase and a rinsing phase, respectively, first (9) and second circuits (11) which are configured to supply hot water to the first (9) and respectively second revolving arms (11) during the washing phase and rinsing phase, the second circuit (9) comprising water heater (20,29) configured to store a prefixed quantity of water and heat the stored water; a heat-pump drying assembly (23) which is provided with a first heat exchanger (24) configured to absorb heat from the tub (3); and a second heat exchanger (25) configured to feed absorbed heat to the water stored in the water heater (20); and a control device (28) configured to control the heat-pump drying assembly (23) during a drying phase to absorb heat from the steam inside the tub (3) to cause the steam to condense, and release the absorbed heat to the water stored in the water heater.

## Description

The present invention relates to a dishwashing machine with a heat-pump drying device and associated method.

As it is known, dishwashing machine for professional use generally comprise: a washing tub for housing dishware to be cleaned; an open collect tank which is arranged under the washing tub and presents its upper open side faced towards the washing tub to collect the process water used during the operating phases, i.e. washing and rinsing phases; and a water filtering device arranged between the washing tub and the open side of the collect tank to filter the water when the latter flows from the washing tub to the collect tank below.

The above-disclosed professional dishwashing machines also comprise a couple of revolving washing arms arranged inside the washing tub to sprinkle of water the dishware during the washing phase, and a washing circuit being configured to supply hot water mixed with dishwashing detergent collected into the collect tank to the revolving washing arms.

Dishwashing machines also comprise a couple of revolving rinsing arms arranged inside the washing tub coaxial the revolving washing arms, to sprinkle of water the dishware during the rinsing phase, and a rinsing circuit, which is configured to supply hot rinsing water to the revolving rinsing arms. During the rinsing phase, an electric heating accumulator, i.e. an electric boiler of the rinsing circuit heats a fixed quantity of clean water at a high prefixed temperature, while an electric pump draws the heated water to the revolving rinsing arms.

The above disclosed professional dishwashing machines have the drawback that heated water which is generated during the rinsing phase produces steam inside the tub which has to be condensed before user open the process tube, to prevent the steam flows into the room.

In addition, the electric consumption of the electric boiler bears heavily on the total energy consumption of the dishwashing machine. For this purpose in the above disclosed dishwashing machine it is need to reduce power supplied to the electric boiler of the rinsing circuit to improve the energy saving.

It is therefore an object of the present invention to provide a solution designed to achieve a drying device in the dishwashing machine which, on one hand, is able to rapidly condense the steam produced inside the tub during the rinsing phase so that the cycle time is reduced, and on the other hand, reduces electric power consumed by the electric boiler.

Patent document EP2064982A1 discloses a dishwashing machine for domestic use, which is provided with a heat-pump drying system comprising an evaporator and a condenser arranged on a side wall and on the bottom wall of the washing tub, respectively. In detail, heat-pump drying system of dishwashing machine disclosed in EP2064982A1 is able to perform a drying phase, wherein the side wall of the washing tub is cooled by the evaporator while the bottom wall of the washing tube is heated by the condenser so that a convective airflow is generated inside the washing tub to cause dishware to dry.

Heat-pump drying system disclosed in EP-2064982A1 allows to obtain an efficient drying into a "domestic" dishwashing machine which however, as it is known, has a structure completely different from the professional dishwashing machines of the kind above disclosed, namely it does not have any electric boiler to be used during the rinsing phase, and consequently does not suggest any indication about how to reduce energy consumption of the electric boiler.

According to the present invention, there is provided a dishwashing machine, as claimed in the accompanying Claims.

In particular, a dishwashing machine according to the present invention comprises:
- a tub for housing dishware to be cleaned;
- first and second revolving arms arranged inside of the tub and configured to sprinkle dishware with water during a washing phase and a rinsing phase, respectively;
- first and second fluid circuits which are configured to supply hot water to the first and the second revolving arms, respectively, during said washing phase and rinsing phase, said second fluid circuit comprising at least a water heating device configured to store a prefixed quantity of water and to heat the stored water;

- a heat-pump drying assembly, which comprises a first heat exchanger configured to absorb heat from the tub and a second heat exchanger configured to feed the absorbed heat to the water stored in said water heating device; and
- a control device configured to control the heat-pump drying assembly during a drying phase to absorb heat from the steam inside the tub to cause the steam to condense, and to release the absorbed heat to the water stored in said water heating device.

Preferably, the first heat exchanger is thermally coupled to an exterior of the tub.

In particular, the first heat exchanger may comprise at least a roll-bond evaporator, which is fixed in thermal contact with the outer surface of the tub.

The first heat exchanger may also comprise at least two roll-bond evaporators, which are fixed in thermal contact with different portions of the outer surface of the tub.

Each roll-bond evaporator of the first heat exchanger preferably comprises a roll-bond plate which is fixed on the outer surface of the side wall of the tube.

The dishwashing machine preferably comprises also a collect tank arranged under the washing tub and structured to collect the process water used during the washing, rinsing and drying phases; the first fluid circuit comprising at least a pump device configured to draw collected water from the collect tank and supply said collected water to the first arms to cause the dishware to be washed.

The second fluid circuit may comprise at least a pump device configured to draw the water from the water heating device to the second arms.

The water heating device may comprise an electric boiler and the second heat exchanger may be arranged inside of said electric boiler.

The water heating device may comprise an electric boiler and a pre-boiler that is in fluid communication with the electric boiler; the second heat exchanger being arranged inside of said pre-boiler.

A non-limiting embodiment of the present invention will be described by way of example with reference to the accompanying drawings, in which:
Figure 1 shows schematically a dishwashing machine according to one embodiment of the present invention;
Figures 2, 3 and 4 show schematically the dishwashing machine during four operating phases respectively; and
Figure 5 shows schematically the dishwashing machine according to a different embodiment of the present invention.

With reference to accompanying Figures, number 1 indicates as a whole a dishwashing machine, such as a dishwasher for professional use, comprising a supporting structure or cabinet 2, and a washing tub 3 arranged inside of the cabinet 2 for housing dishware to be cleaned. For this purpose, at least a extractable and/or removable basket (not shown) is provided inside of the washing tube 3 for containing respective loads of dishware.

Preferably, dishwashing machine 1 further comprises a front door (not shown) being hinged to the cabinet 2 so as to form a closing wall of the front opening of the washing tub 3.

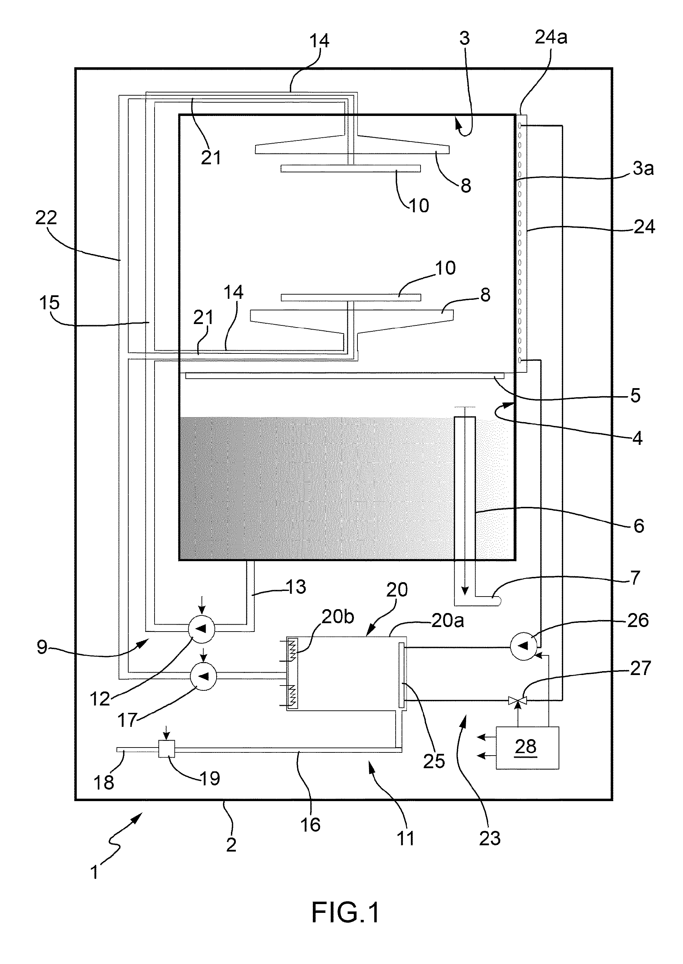

In the embodiment of Figure 1, dishwashing machine 1 also comprises an open collect tank 4 which is arranged inside the cabinet 2 so that it is placed under the washing tub 3 and presents its upper open side faced towards the washing tub 3 to collect the process water used during the operating phases; and a water filtering device 5 arranged between the washing tub 3 and the open side of the collect tank 4 to filter the water, when the latter flows from the washing tub 3 to the collect tank 4 below. Preferably, the collect tank 4 is structured to collect: the washing water mixed with detergent used during the washing phase, the rinsing water used during the rinsing phase, and the condensed steam obtained during the drying phase.

Referring to the example shown in Figure 1, collect tank 4 is structured to contain prefixed liters of water, for example 20 liters. For this purpose process tank 4 is preferably, although not necessarily, provided with an overflow conduct system, i.e. overflow pipe 6, which is configured to draw water from the collect tank 4 to an outer discharge circuit 7 (only partially shown) when the water inside of the collect tank 4 exceeds the prefixed threshold.

In the embodiment shown in Figure 1, dishwashing machine 1 also comprise a couple of revolving washing arms 8, which are arranged inside the washing tub 3 to sprinkle of water the dishware during the washing phase, and a washing fluid circuit 9 being configured to supply hot water mixed with detergent present into the collect tank 4 to the washing arms 10.

Dishwashing machine 1 also comprises a couple of revolving rinsing arms 10 arranged inside of the washing tub 3 coaxial the revolving washing arms 8, to sprinkle of water the dishware during the rinsing phase, and a rinsing fluid circuit 11, which is configured to supply hot rinsing water to the revolving rinsing arms 10.

Referring to the example shown in Figures 1-4, washing circuit 9 comprises an electric pump 12, that is a pump driven by an electric motor, having an inlet and a outlet sections which are in fluid communication with the collect tank 4 through a conduit 13 to receive collected water, and respectively, with conduits 14 of the washing arms 8 trough a conduit 15 to supply water to washing arms 8.

Regarding the rinsing circuit 11, it comprises a conduit 16 connected to a water network 18, preferably thought not necessarily, through an electric valve 19; and an electric water heater 20, i.e. an electric boiler, which has an inlet in fluid communication with the conduit 16 to receive clean fresh water from the water network 18, and an outlet, which is in fluid communication with conduits 21 of the rinsing arms 10 through a conduit 22 to supply heated rinsing water to the rinsing arms 10.

Preferably the water heater 20 comprises a vessel 20a structured to contain prefixed liters of water, for example about 10 liters; at least an electric heating device 20b, i.e. electric resistor configured to heat the water stored in the vessel 20a; and sensor devices (not shown) configured to measure the temperature of the water inside of the vessel 20a.

According to a preferred embodiment, the rinsing circuit 11 also comprises an electric pump 17, which draws the water from the electric water heater 20 to the rinsing arms 10. Rinsing could be made also without a pump, simply exploiting the pressure of the water network 18, but the presence of the pump 17 improves the process by making the water pressure during the rinsing cycle substantially constant, i.e. independent from fluctuations of the network pressure.

Referring to Figure 1, dishwashing machine 1 also comprises a heat-pump drying device 23 comprising:
- a first heat exchanger 24, which is thermally coupled to an exterior of the washing tub 3, in particular arranged on at least a side wall of the tub 3, and is configured so that a refrigerant fluid, i.e. CO₂ absorbs heat from steam generated inside of the tub 3 in order to cooling-down the steam to cause condensation of the latter;
- a second heat exchanger 25, which is arranged inside of the electric water heater 20 along a circulation refrigerant circuit of the heat-pump drying device 23, and which is structured to release to the accumulated water heat absorbed by the refrigerant fluid into the washing tub 3;
- an electrically-powered refrigerant compressing device 26, which is interposed between the refrigerant-outlet of the first heat exchanger 24 and the refrigerant-inlet of the second heat exchanger 25, and which is structured for compressing the gaseous-state refrigerant directed towards first heat exchanger 24 so that refrigerant pressure and temperature are much higher at the refrigerant-inlet of second heat exchanger 25 than at the refrigerant-outlet of first heat exchanger 24; and
- an expansion valve 27 or similar passive/operated refrigerant expansion device (for example a capillary tube, a thermostatic valve or an electrically-controlled expansion valve) which is interposed between the refrigerant-outlet of second heat exchanger 25 and the refrigerant-inlet of first heat exchanger 24, and is structured so as to cause a rapid expansion of the refrigerant directed towards the first heat exchanger 24, so that refrigerant pressure and temperature are much higher at the refrigerant-outlet of second heat exchanger 25 than at the refrigerant-inlet of first heat exchanger 24.

According to a preferred embodiment, the first heat exchanger 24 is conventionally referred to as the "evaporator" of the heat-pump drying device 23, and it is structured so that the low-pressure and low-temperature refrigerant directed to the refrigerant compressing device 26 absorbs heat from the steam present inside of the washing tub 3, thus causing cooling of the latter, while the second heat exchanger 25, in turn, is conventionally referred to as the "condenser" of the heat-pump drying device 23, and it is structured so that high-temperature refrigerant arriving from the delivery of the refrigerant compressing device 26 releases the heat to the water inside of the electric water heater 20 .

Preferably, the first heat exchanger 24 comprises a roll-bond evaporator, which is in thermal contact with the outer surface of the side wall of the washing tube 3. More specifically, the roll-bond evaporator of the first heat exchanger 24 comprises a roll-bond plate 24a which is fixed on the outer surface of the side wall 3a of the washing tube 3 so as to ensure the desired heat-exchange relation.

In a different embodiment not shown, the first heat exchanger 24 may comprise two or more roll-bond evaporators, in thermal contact with separate external parts of the washing tube 3, in particular fixed onto different outside portions of the side wall 3a of the washing tube 3, so as to ensure the desired heat-exchange relation.

According to a preferred embodiment, dishwashing machine 1 also comprises a control device 28 of the kind based on an electronic microprocessor, that comprises memory means or to which memory means are operatively associated.

Control device 28 is configured to supervise operation of the dishwashing machine 1, and therefore, execution of the treatment program or programs executable by the machine. Preferably, data necessary for the execution of a plurality of treatment programs are contained in the memory means of the control device 28 and the device includes control means (not shown), such as a control panel or user interface, provided with means for choosing a program from among those available and for starting it. One or more treatment programs executable by the dishwashing machine 1 generally comprise a plurality of operative phases that are carried out with water, for example one or more loading phase, one or more washing phases, one or more rinsing phases, and one or more drying phase.

In the starting/loading phase, a predetermined quantity of water is loaded into the electric water heater 20, wherein the water is heated by the electric heating device 20b. In detail, heated water is loaded by the electric pump 17 from the electric water heater 20 to the washing tub 3 through the rinsing arms 10 so that water flows towards the collect tank 4 beneath at a first fixed medium temperature, for example about 55°C. Based on the temperature and the quantity of water loaded into the collect tank 4, the control device 28 controls: the electric valve 19 to supply the water from the water network 18 to the electric water heater 20; the electric water heater 20 to heat the stored water into the vessel 20a; and the electric pump 17.

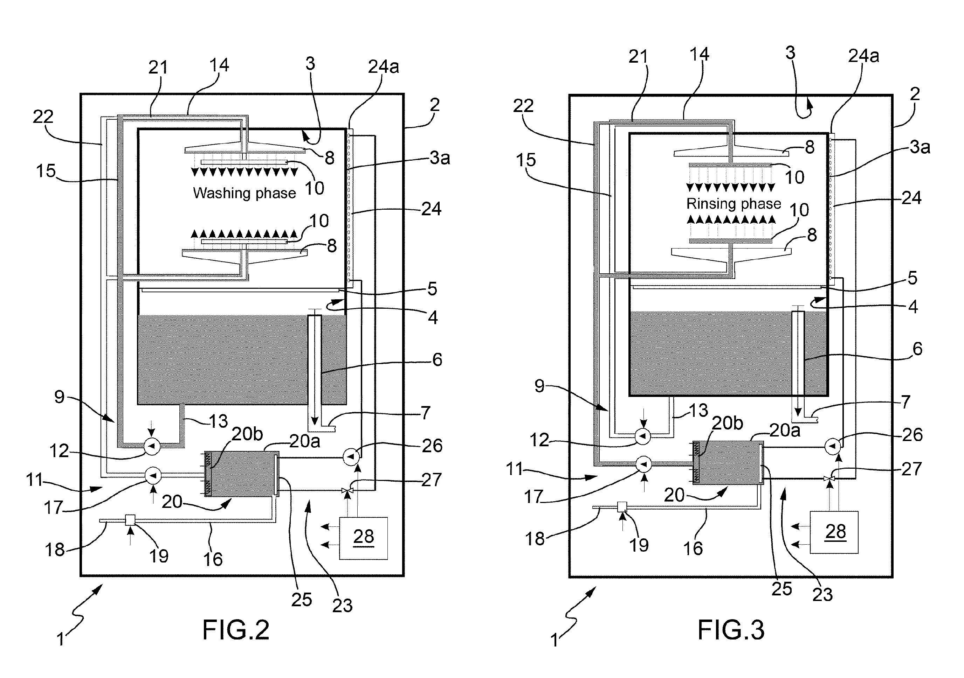

With reference to Figure 2, after the loading phase is completed, the dishwashing machine 1 is able to perform a user-selected treatment program comprising consecutive operating phases: washing, rinsing and drying phases.

Preferably treatment program performed by the dishwashing machine 1 starts with one or more washing phases, wherein the control device 28 drives the electric pump 12 to cause the detergent mixed with heated water contained/collected in the collect tank 4 at a medium temperature (55°C) to be supplied to the washing arms 8 so that the dishware are washed, repeatedly.

With reference to Figure 3, after one or more washing phases are performed, control device 28 performs at least one rinsing phase, wherein the clean water at high temperature stored into the water heater 20 is supplied to the rinsing arms 10 to give the dishware a rinse. In detail, control device 28 controls the electric heating device 20b according to measured temperature of the water stored in the vessel 20a to cause the temperature of the water to reach a high temperature threshold, i.e. above 82° C, and drives the electric pump 17 to draw the rinsing water from vessel 20a of the electric water heater 20 to the rinsing arms 10 wherein the heat clean water is sprinkled on the dishware to cause the latter to be rinsed.

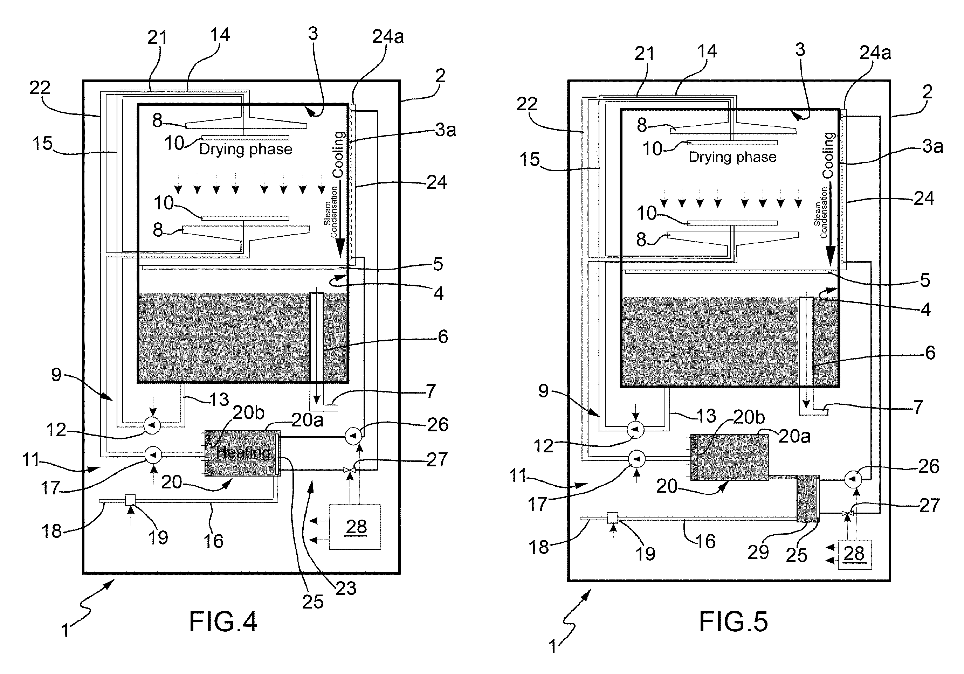

Referring to Figure 4, after completing the rinsing phase, control device 28 performs at least a drying phase wherein heat pump assembly 23 is activated to extract heat from the washing tub 3 and conveniently feed it to the water stored in the water heater 20. In detail, during the drying phase, control device 28 controls the expansion valve 27 and the compressing device 26 so that the first heat exchanger 24, i.e. the evaporator, absorbs heat from steam generated inside of the washing tub 3 in order to cooling-down the steam to cause condensation of the latter, and the second heat exchanger 25, i.e. the condenser, releases to the accumulated water heat absorbed by the refrigerant fluid into the washing tub 3.

Therefore, during the drying phase the heat which the heat pump assembly 23 extracts from the washing tub 3 is fed to water stored in the water heater 20 and allows conveniently to reduce the use of the electric heating device 20b causing energy saving of the dishwashing machine 1.

In a different embodiment shown in Figure 5 of the present invention, the electric water heater 20 of the rinsing circuit 11 is in fluid communication with a water pre-heater 29, i.e. pre-boiler, for example via a conduit, and the second heat exchanger 25, i.e. the condenser, instead of being arranged into the electric water heater 20, is placed inside of the water pre-heater 29. In addition, in the embodiment shown in Figure 5, instead of being connected with the electric water heater 20, the conduits 16 is directly connected with the water pre-heater 29 for supplying the clean water to the latter.

According to this embodiment, the control device 28 performs at least a drying phase wherein the heat pump assembly 23 is activated to extract heat from the washing tub 3 to cause the steam to be condensed, and to conveniently feed the absorbed heat to the water stored in the water pre-heater 29. Because the water pre-heater 29 is in free fluid communication with the water heater 20 and the average temperature of the water stored in the water pre-heater 29 is lower than the average temperature of the water stored in the water heater 20, a convective current is generated to cause the heated water to circulate from the water pre-heater 29 towards the water heater 20.

It should be pointed out that because temperature of the water contained in the water pre-heater 29 is lower than the temperature in the water heater 20, the refrigerant fluid used in the heat-pump assembly may conveniently have a condensing temperature lower than the condensing temperature of refrigerant fluid used in the embodiment shown in Figures 2-4.

The dishwashing machine of the present invention has the major advantages of:
- rapidly condensing the steam produced inside the tub during the rinsing phase so that the cycle time is reduced, and
- reducing electric power consumed by the electric boiler.

Clearly, changes may be made to the dishwashing machine and method as described and illustrated herein without, however, departing from the scope of the present invention.

## Claims

1. Dishwashing machine (1) comprising:
- a tub (3) for housing dishware to be cleaned;
- first and second revolving arms (8, 10) arranged inside of the tub (3) and configured to sprinkle dishware with water during a washing phase and a rinsing phase, respectively;
- first and second fluid circuits (9, 11) which are configured to supply hot water to the first and the second revolving arms (8, 10), respectively, during said washing phase and rinsing phase, said second fluid circuit (11) comprising at least a water heating device (20, 29) configured to store a prefixed quantity of water and to heat the stored water;
said dishwashing machine (1) being **characterized in** comprising:
- a heat-pump drying assembly (23), which comprises a first heat exchanger (24) configured to absorb heat from the tub (3) and a second heat exchanger (25) configured to feed the absorbed heat to the water stored in said water heating device (20, 29); and
- a control device (28) configured to control the heat-pump drying assembly (23) during a drying phase to absorb heat from the steam inside the tub (3) to cause the steam to condense, and to release the absorbed heat to the water stored in said water heating device (20, 29).

2. Dishwashing machine according to Claim 1, wherein the first heat exchanger (24) is thermally coupled to an exterior of the tub (3).

3. Dishwashing machine according to Claim 1 or 2, wherein the first heat exchanger (24) comprises at least a roll-bond evaporator, which is fixed in thermal contact with the outer surface (3a) of the tub (3).

4. Dishwashing machine according to Claim 3, wherein the first heat exchanger (24) comprises at least two roll-bond evaporators, which are fixed in thermal contact with different portions of the outer surface (3a) of the tub (3).

5. Dishwashing machine according to Claim 3 or 4, wherein each roll-bond evaporator of the first heat exchanger (24) comprises a roll-bond plate (24a) which is fixed on the outer surface (3a) of the side wall of the tube (3).

6. Dishwashing machine according to any of the previous Claims, comprising a collect tank (4) which is arranged under the washing tub (3) and is structured to collect the process water used during the washing, rinsing and drying phases; said first fluid circuit (9) comprising at least a pump device (12) configured to draw collected water from the collect tank (4) and supply said collected water to said first arms (8) to cause the dishware to be washed.

7. Dishwashing machine according to any of the previous Claims, wherein said second fluid circuit (11) comprises at least a pump device (17) configured to draw the water from the water heating device (20) to the second arms (10).

8. Dishwashing machine according to any of the previous Claims, wherein said water heating device (20, 29) comprises an electric boiler (20); said second heat exchanger (25) being arranged inside of said electric boiler (20).

9. Dishwashing machine according to any of the previous Claims from 1 to 7, wherein said water heating device (20) comprise an electric boiler (20) and a pre-boiler (29) which is in fluid communication with said electric boiler; said second heat exchanger (25) being arranged inside of said pre-boiler (20).
